# EUROPEAN PATENT APPLICATION

(11) **EP 1 596 579 A2**
(43) Date of publication of application: **16.11.2005**
(21) Application number: 05009736.9
(22) Date of filing: 03.05.2005
(51) Int. Cl.: H04N 3/15

(54) **Solid-state image pickup device and camera utilizing the same**

(30) Priority: 13.05.2004 JP 2004143758
(71) Applicant: CANON KABUSHIKI KAISHA, Ohta-ku, Tokyo (JP)
(72) Inventor: Shinohara, Mahito c/o CANON KABUSHIKI KAISHA, Tokyo (JP)
(74) Representative: TBK-Patent

(57) **Abstract**

The invention provides a solid-state image pickup device with little gap in operation timings of the pixels, providing a sensor output of a high S/N ratio. In a solid-state image pickup device provided with a photoelectric conversion pixel unit 1 formed by an array of a plurality of pixels each containing at least a photoelectric conversion unit and a transistor for amplifying a signal from the photoelectric conversion unit, and memory units 9, 10 formed by an array of analog memory cells corresponding to at least a part of the pixels of the photoelectric conversion pixel unit 1, there are provided plural coupling capacitors respectively connected to plural output lines each of which is connected to a column of pixels, for clamping a signal from a pixel thereby eliminating a noise from the pixel, and plural amplifiers 24 for amplifying a signal voltage from the coupling capacitor with a gain exceeding unity and outputting an amplified signal for writing into the analog memory cell.

## Description

### BACKGROUND OF THE INVENTION

### Field of the Invention

The present invention relates to a solid-state image pickup device and an image pickup system, and more particularly an amplifying type solid-state image pickup device and a camera, provided with a photoelectric conversion pixel unit constituted of a plurality of a pixel including at least a photoelectric conversion unit and a transistor for amplifying a signal from the photoelectric conversion unit.

### Related Background Art

As a solid-state image pickup device, a CCD is often utilized because of a high S/N ratio thereof. On the other hand, there has also been developed so-called amplifying type solid-state image pickup device which is featured in a simpler method of use and a lower electric power consumption. The amplifying type solid-state image pickup device is of a structure in which a signal charge accumulated in a light-receiving pixel is guided to a control electrode of a transistor provided in a pixel unit, and an amplified signal is outputted from a main electrode. More specifically, it includes for example an SIT image sensor utilizing an SIT as an amplifying transistor (A. Yusa, J. Nishizawa et al., "SIT image sensor: Design consideration and characteristics", IEEE trans. Vol. ED-33, pp.735-742, June 1986), a BASIS utilizing a bipolar transistor (N. Tanaka et al., "A 310K pixel bipolar imager (BASIS)", IEEE Trans. Electron Devices, vol. 35, pp.646-652, May 1990), a CMD utilizing a JFET with depleted control electrode (Nakamura et al., "gate accumulation type MOS phototransistor image sensor", Bulletin of Television Technology Association, 41, 11, pp.1075-1082, Nov. 1987) and a CMOS sensor utilizing a MOS transistor (S. K. Mendis, S. E. Kemeny and E. R. Fossum, "A 128x128 CMOS active image sensor for highly integrated imaging systems", in IEDM Tech. Dig., 1993, pp.583-586).

In particular, developments are actively made on the CMOS sensor as it shows a good matching with a CMOS process and as peripheral CMOS circuits can be incorporated on a same chip. However, these amplifying type solid-state image pickup devices are commonly associated with a drawback that a fixed pattern noise (FPN) appears on an image sensor signal since an output offset of an amplifying transistor provided in each pixel is different from pixel to pixel. In order to avoid such FPN, various signal readout circuits have been proposed.

Another drawback of the amplifying type solid-state image pickup device is related with its timing of operation. In the image sensor of this type, the readout operation of pixel signals is executed for each row, followed by a horizontal transfer operation. For this reason, the pixel signal accumulation timing differs for each row, as the pixel signal accumulating operation in a field is terminated by a pixel signal readout. Therefore, the timing gap between the first row and the last row almost becomes a field period. On the other hand, in a CCD, all the pixel signals are simultaneously transferred to a vertical CCD, and the pixel signal accumulating operation of the CCD is completed and is also started by such simultaneous transfer, so that the operation of the CCD is simultaneous. Such non-synchronous operation of the amplifying type image sensor results in an image distortion in case of image pickup of a fast-moving object.

For the purpose of an improvement on such drawback, Japanese Patent Application Laid-open Nos. S58-125982 and H02-65380 propose an image sensor provided with an analog frame memory, constituted of memory cells each formed by a MOS switch and a capacitance. In such proposed sensor, a pixel signal is transferred within a short time to a corresponding memory cell without involving a horizontal transfer operation, and a readout of the memory signals involving a horizontal transfer is executed thereafter over an approximately field period. In this manner the timing gap of the operation is significantly reduced.

Also Japanese Patent Application Laid-open No. 2003-51989 discloses a solid-state image pickup device provided with an amplifier with a gain exceeding unity for each column.

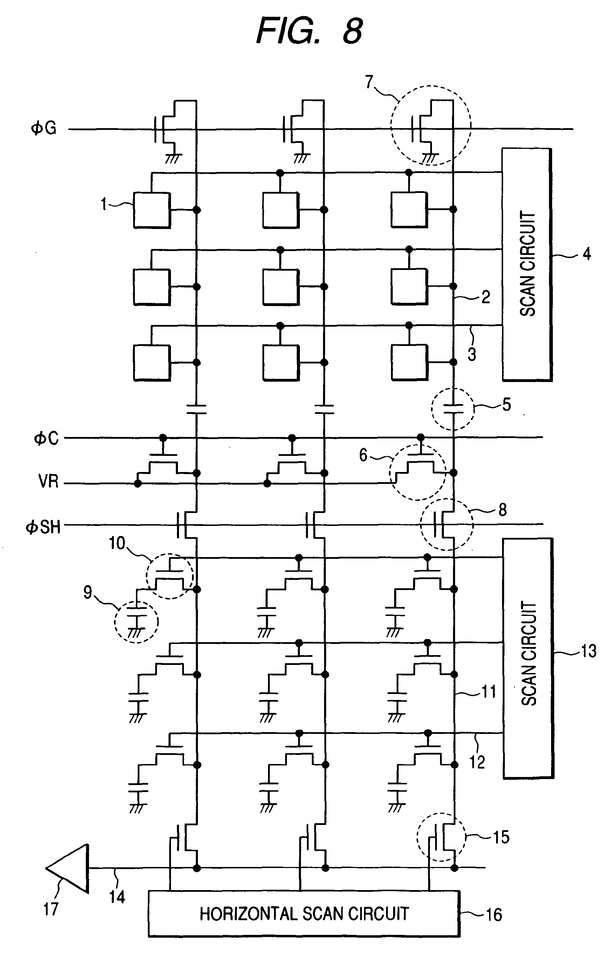

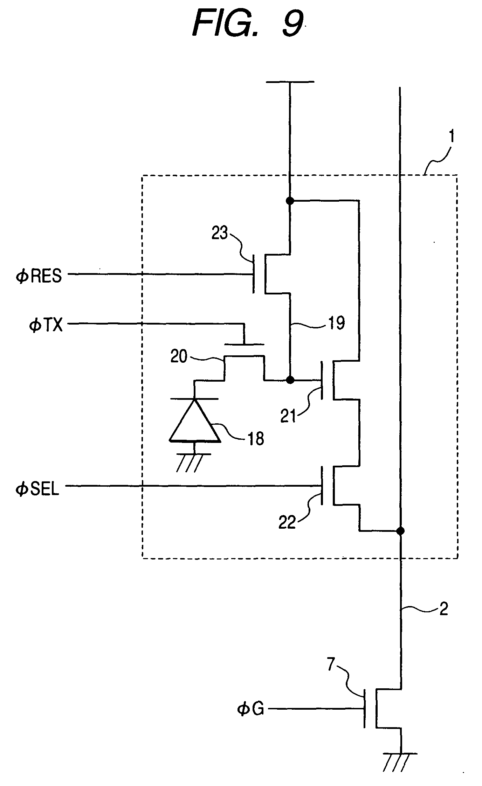

Fig. 8 is a circuit diagram of an amplifying-type solid-state image pickup device of the aforementioned prior structure, wherein 1 indicates an amplifying pixel provided at least with a photodiode and an amplifying transistor. Fig. 9 is a circuit diagram of a pixel of a typical CMOS sensor, as an example of the amplifying pixel in Fig. 8. Now the prior technology will be explained with reference to Figs. 8 and 9.

As shown in Fig. 9, a pixel 1 is constituted of a photodiode 18, a transfer transistor 20 controlled by ϕTX, a floating diffusion (FD) unit 19 to which a signal charge from the photodiode 18 is transferred, an amplifying transistor 21 of which a gate is connected with the FD unit 19, a pixel selecting transistor 22 controlled by ϕSEL, and a resetting transistor 23 controlled by ϕRES. The selecting transistor 22 is connected to a vertical pixel output line 2, which is connected to a current supply transistor 7 controlled by ϕG.

As shown in Fig. 8, the amplifying transistor 21 of a pixel 1 of a row selected by a scanning circuit 4 functions as a source follower, and gives an output voltage to the vertical pixel output line 2, when ϕSEL is shifted to a high-level state to turn on the selecting transistor 22, and to induce a current from the current supply transistor 7. At first the floating diffusion unit 19 is reset by a reset pulse ϕRES applied to the resetting transistor 23, whereby an output corresponding to the FD potential appears on the vertical pixel output line 2. Such reference voltage at the vertical pixel output line 2 shows a fluctuation because of a pixel-to-pixel fluctuation of a threshold voltage of the source follower, but, at the side of a vertical memory output line 11, a constant clamp potential VR becomes a reference voltage since a clamping transistor 6 and a switching transistor 8 are turned on by pulses ϕC and ϕSH. Then the clamping transistor 6 is turned off to maintain a side at the vertical memory output line 11 of a coupling capacitor 5 in a floating state, and a pulse ϕTX is applied to the transfer transistor 20 thereby transferring a signal charge in the photodiode 18 to the FD unit 19. A drop of the FD voltage corresponding to the signal is read out to the vertical pixel output line 2, and is transmitted through the coupling capacitor 5 to the vertical memory output line 11. This signal voltage is written into a memory cell capacitance 9 by a pulse application through a memory selecting line 12 to a writing transistor 10. The memory selecting lines 12 are selected in succession by a memory scanning circuit 13. The signal voltage written into the memory cell capacitance 9 does not contain a fixed pattern noise (FPN) of the pixel because of the aforementioned clamping operation. Thus, a signal corresponding to the signal charge present in the photodiode 18 is read out to the vertical pixel output line 2 (read-out signal containing a noise component), while the noise component is read out in advance to the vertical pixel output line 2. Therefore, a potential change in the vertical pixel output line 2 is caused only by a signal component, and the signal transmitted to the vertical output line 11 through the coupling capacitor 5 is free of the noise component. After such signal transfer from the pixel to the memory for each row, a signal readout from the memory is executed in the following manner.

At first pulses ϕC and ϕSH are applied to the clamping transistor 6 and the switching transistor 8 to reset the vertical memory output line 11 to the potential VR. After the switching transistor 8 is turned off, a signal voltage stored in the capacitance 9 of a memory cell of a row selected by the memory scanning circuit 13 is transferred to the vertical memory output line 11. The signal voltage on the vertical memory output lines 11 is then transferred to a horizontal output line 14, through the switching transistors 15 scanned by a horizontal scanning circuit 16. The signal voltage on the horizontal output line is amplified by an amplifying circuit 17 and is read out as a sensor output. Thus, the memory signals are read out by the memory scanning circuit 13 and the horizontal scanning circuit 16. The transfer time of the pixel signals to the memory is significantly reduced in comparison with a readout time of an ordinary CMOS sensor without the memory. Therefore the drawback on the time difference in the timing of pixel accumulating operation is improved sufficiently.

However, the amplifying type solid-state image pickup device with a frame memory by such prior technology is associated with a drawback on S/N ratio. More specifically, the signal voltage read out from the pixel is not only weakened significantly by a signal division in the signal transfer path but also is subjected to an influence of a thermal noise on the signal transfer path. The signal division occurs by a capacitative division in the signal transfer, firstly at the transfer from the vertical pixel output line 2 to the memory capacitance 9 and secondly at the transfer from the memory capacitance 9 to the horizontal output line 14. The thermal noise is caused at the resetting of the signal path, namely the coupling capacitor 5, the vertical memory output line 11, the memory capacitance 9 and the horizontal output line 14. The noise charge is represented by (kTC)^{1/2} wherein k is a Boltzmann's constant, T is an absolute temperature and C is a capacitance of a portion to be reset.

### SUMMARY OF THE INVENTION

In consideration of the foregoing, an object of the present invention is to provide a solid-state image pickup device showing little gap in the operation timing of pixels and providing a sensor output of a high S/N ratio.

The solid-state image pickup device of the present invention, constituted of a photoelectric conversion pixel unit formed by an array of a plurality of pixels each containing at least a photoelectric conversion unit for converting an incident light into a signal charge for accumulation and a transistor for converting the signal charge into a voltage signal and amplifying the voltage signal for output, and a memory unit formed by a two-dimensional array of analog memory cells corresponding to at least a part of the pixels of the photoelectric conversion pixel unit, is characterized in including a coupling capacitor provided for each column of the photoelectric conversion unit and clamping the signal voltage from the pixel thereby eliminating a noise in the pixel, and an amplifier provided in each column of the photoelectric conversion unit and amplifying the signal voltage from the pixel with a gain exceeding unity for writing into the memory cell corresponding to the pixel.

In the invention, the drawbacks resulting from a signal decrease by the signal division and from the noise associated therewith can be suppressed by a high-gain amplification of the amplifier provided for each column. In case a fixed pattern noise (FPN) resulting from an offset of the amplifier becomes a problem, a high S/N ratio can be realized by outputting the offset and the amplified signal including the offset and taking difference of the two.

The present invention of the first embodiment allows to realize an amplification type solid-state image pickup device with little gap in the operation timing of pixels, while maintaining a high S/N ratio in the pixel output. Also the present invention of the second embodiment allows to realize an amplification type solid-state image pickup device with little gap in the operation timing of pixels with a high S/N ratio in the pixel output by a relatively simple design.

Further, the present invention of the third embodiment allows to realize an amplification type solid-state image pickup device with little gap in the operation timing of pixels, while maintaining the pixel output at an even higher S/N ratio.

### BRIEF DESCRIPTION OF THE DRAWINGS

Fig. 1 is a circuit diagram showing a configuration of a sensor of a first embodiment of the present invention;
Fig. 2 is a pulse timing chart showing operations of the sensor shown in Fig. 1;
Fig. 3 is a circuit diagram showing a configuration of a sensor of a second embodiment of the present invention;
Fig. 4 is a circuit diagram showing a configuration of a sensor of a third embodiment of the present invention;
Fig. 5 is a pulse timing chart showing operations of the sensor shown in Fig. 4;
Fig. 6 is a block diagram in case a solid-state image pickup device of the invention is applied to a still video camera capable of taking a moving image;
Fig. 7 is a block diagram in case a solid-state image pickup device of the invention is applied to a video camera;
Fig. 8 is a circuit diagram showing an amplification type solid-state image pickup device with a frame memory in a prior technology; and
Fig. 9 is a circuit diagram showing a pixel of a typical prior CMOS sensor.

### DETAILED DESCRIPTION OF THE PREFERRED EMBODIMENTS

In the following description, components same as those in Figs. 8 and 9 are represented by same numbers.

### (First embodiment)

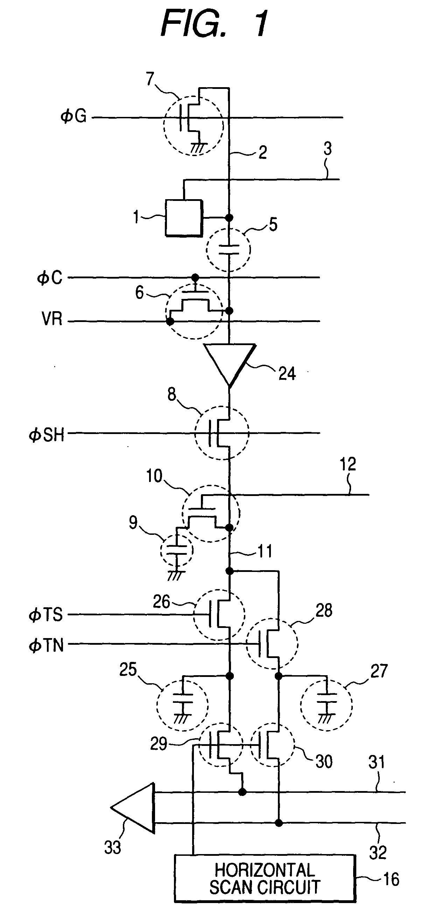

Fig. 1 is a circuit diagram of a sensor in a first embodiment of the present invention, along a signal path from a pixel to a sensor output. For the purpose simplicity, there are illustrated only a pixel, a memory cell and readout means for a column, but, in practice, the pixels and the memory cells are arranged two-dimensionally and the readout means is provided for each column, as shown in Fig. 8. In Fig. 8, for the purpose of simplicity, the pixels and the memory cells are both illustrated in a 3 x 3 arrangement, but the numbers of the pixels and the memory cells are selected according to the necessity, and the number of the memory cells may be less than the number of the pixels. For example, in case signals from plural pixels are added or skipped for storage in a memory cell, the number of the memory cells may be less than the number of the pixels, but there is naturally required a number of memory cells corresponding to a number of picture elements necessary for constructing an image. For example, in order to construct an image of VGA format, there is required a memory unit having 640 × 480 memory cells.

Thus the memory cells are required in a number matching the format of the image to be formed.

Therefore, in an ordinary memory cell structure, the number of rows or columns often becomes several hundred or larger. The pixel 1 has a structure same as that shown in Fig. 9. The pixel is not limited to a CMOS sensor pixel but can be an amplification type pixel such as that of another amplification type solid-state image pickup device such as CMD mentioned above. The invention is also applicable to the structure of VMTS (threshold voltage modulation image sensor), BCAST (buried charge accumulator and sensing transistor array) or LBCAST (lateral buried charge accumulator and sensing transistor array). Particularly for the BCAST or the LBCAST, the invention can be realized without an essential change, by replacing an amplifying MOS transistor with a JFET transistor.

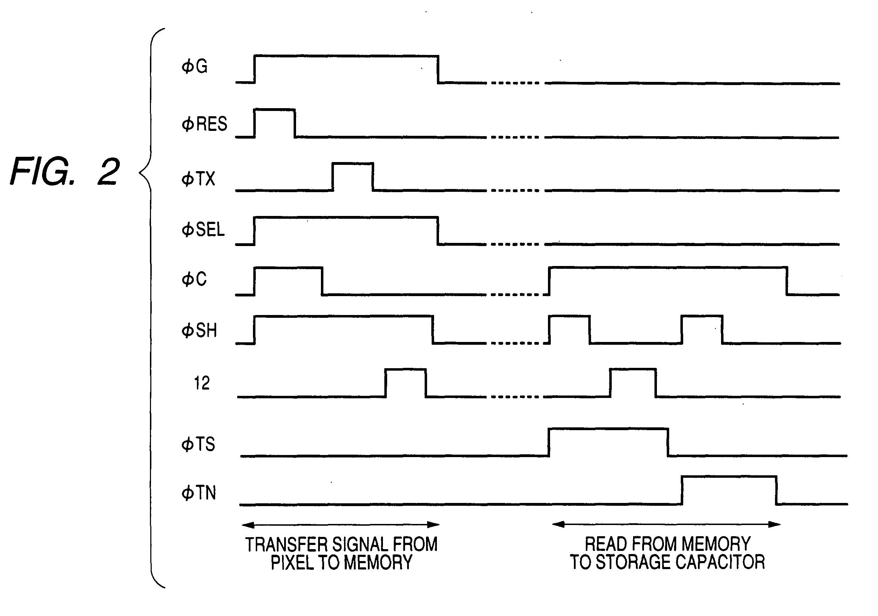

Fig. 2 is a pulse timing chart showing operations of the sensor shown in Fig. 1.

The structure shown in Fig. 1 is different from that in Fig. 8 in that a column amplifier 24, accumulating capacitors 25, 27, and switching transistors 26, 28, 30 are provided and that the amplifying circuit 17 is replaced by a differential amplifier 33. Functions and operations of other components are same as those in Fig. 8 and will not therefore be explained further. Also the scanning circuits 4, 13 shown in Fig. 8 are omitted in Fig. 1 for the purpose of simplicity.

Referring to Fig. 1, the column amplifier 24 is connected, at an input terminal thereof, to the coupling capacitor, and amplifies the clamp signal of the pixel with such a high gain as to compensate a loss in the S/N ratio induced by the signal division and the thermal noise in the signal path after the frame memory. The accumulating capacitor 25 receives, through the switching transistor 26, a signal from a memory cell constituted of the memory cell capacitance 9 and the writing transistor 10, while the accumulating capacitor 27 receives, through the switching transistor 28, an offset output from the column amplifier 24. The voltages received by the accumulating capacitor 25 and the accumulating capacitor 27 are transferred, respectively through the switching transistor 29 and the switching transistor 30, to the horizontal output lines 31, 32. The differential amplifier 33, connected at input terminals thereof to the horizontal output lines 31, 32, amplifies and outputs a voltage difference of these two inputs. A final sensor output from the differential amplifier 33 has a high S/N ratio with little influence of thermal noise and without an offset of the column amplifier.

Now referring to Fig. 2, a pixel output is at first transferred to the memory cell. These operations have pulse timings same as those in the prior technology explained in Figs. 8 and 9, but the signal written into the memory cell is different in being amplified with a high gain (exceeding unity) by the column amplifier 24 and in containing an offset of the column amplifier 24.

After the transfer of a series of signal from the pixels to the memory, there is executed a readout operation of the memory signals to the accumulating capacitors 25, 27. In this operation, an input portion of the column amplifier 24 is clamped at a potential VR by the clamping transistor 6 which is turned on by a high level state of ϕC. At first, the vertical memory output line 11 and the accumulating capacitor 25 are reset to the offset output of the column amplifier 24 through the switching transistor 8 and the switching transistor 26 which are respectively turned on by a high-level state of ϕSH and ϕTS. Then, after ϕSH is shifted to a low level state to turn off the switching transistor 8, the memory selecting line 12 is shifted to a high level state to turn on the writing transistor 10, whereby the signal on the memory capacitance 9 is released to the vertical memory output line 11 and the accumulating capacitor 25. Such signal is sampled on the accumulating capacitor 25, by applying a pulse ϕTS to the switching transistor 26.

Then ϕSH and ϕTN are shifted to a high level state to turn on the switching transistor 8 and the switching transistor 28, through which the vertical memory output line 11 and the accumulating capacitor 27 are reset to the offset output of the column amplifier 24. Such offset is sampled in the accumulating capacitor 27 by applying a pulse ϕTN to the switching transistor 28.

A horizontal scanning subsequent to the aforementioned operations is executed by the horizontal scanning circuit 16, which is omitted in Fig. 2. The horizontal scanning circuit 16 scans the transistor 31 and the transistor 32 constituting a pair, thus transferring the voltages in the accumulating capacitors 25, 27 respectively to the horizontal output lines 31, 32. The differential amplifier 33 cancels the offset of the column amplifier 24, thereby outputting a sensor signal of a high S/N ratio.

### (Second embodiment)

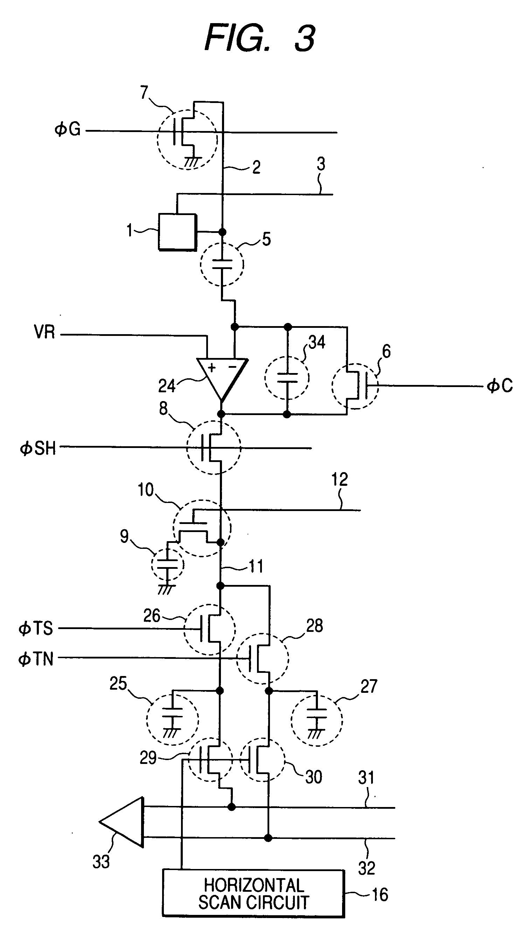

Fig. 3 is a circuit diagram of a sensor of a second embodiment of the present invention, along a signal path from the pixel to the sensor output. In Fig. 3, the column amplifier 24 is constituted of a feedback amplifier, of which output is transmitted to a negative input terminal thereof through a coupling capacitor 34. Consequently, a gain of the column amplifier 24 is determined by a ratio of the coupling capacitor 5 and the coupling capacitor 34. A positive input terminal (+) is fixed at the clamp voltage VR. A negative input terminal (-) is clamped at the clamp potential VR by an application of a pulse ϕC to the clamping transistor 6, since these two input terminals are in an imaginary shortcircuit state. Therefore the pulse timings for the operation in this sensor configuration are same as those of the first embodiment shown in Fig. 2. However, the circuit shown in Fig. 3 is more suited for the invention, in that the coupling capacitor 5 for clamping also serves to determine the gain of the column amplifier 24 and that the column amplifier of a high gain is easier to design. For the feedback amplifier, a feedback amplifier utilizing a capacitance is preferred. For example, a feedback amplifier utilizing a resistance shows a larger current for a smaller resistance thereby increasing an electric power consumption while it shows larger noises with a deteriorated response for a larger resistance. In consideration of these points, there is preferred a feedback amplifier utilizing a capacitance.

### (Third embodiment)

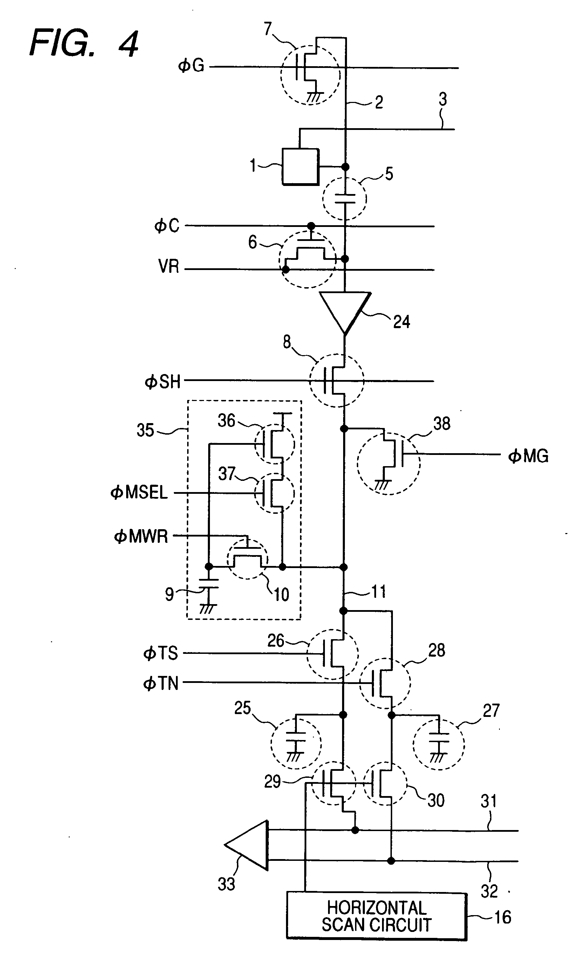

Fig. 4 is a circuit diagram of a sensor of a third embodiment of the present invention, along a signal path from the pixel to the sensor output. In Fig. 4, there is employed a memory having an amplifying function in the cell. An amplifying analog memory cell is already known as disclosed in USP No. 5,805,492. Referring to Fig. 4, a memory cell 35 is constituted of an amplifying transistor 36, a memory selecting transistor 37, a writing transistor 10 and a memory cell capacitance 9.

A current supply transistor 38 supplies a current in such a manner that the amplifying transistor 36 functions as a source follower. The third embodiment of the invention employs such amplifying frame memory instead of the DRAM type memory employed in the first and second embodiments.

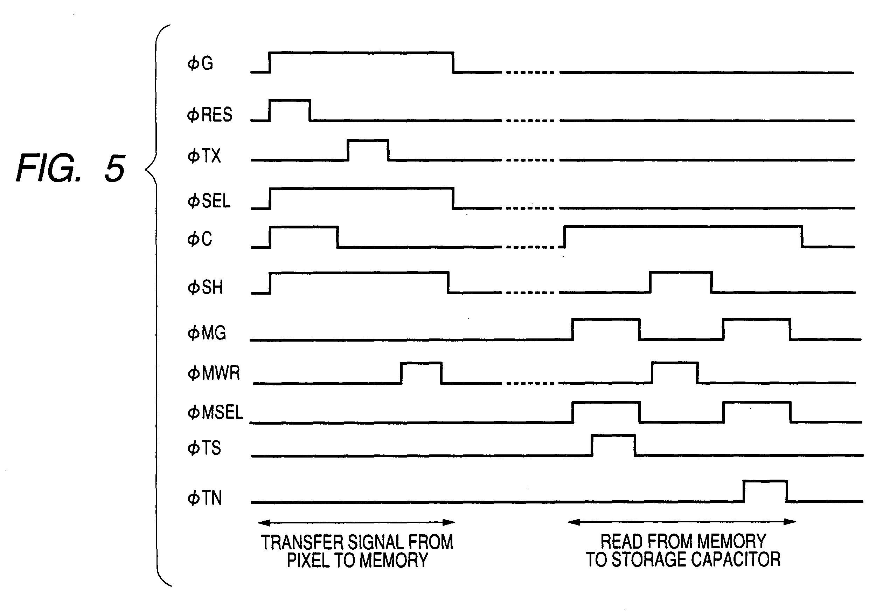

Fig. 5 is a pulse timing chart showing operations of the sensor of the third embodiment. The operations will be explained with reference to Figs. 4 and 5. The signal transfer from the pixel to the memory is executed in the same manner as in the first embodiment explained in Fig. 2. A memory writing pulse 12 shown in Fig. 2 is represented by ϕMWR in Fig. 5.

A signal readout from the memory cell is executed by applying pulses ϕMG and ϕMSEL respectively to the gates of the current supply transistor 38 and the memory selecting transistor 37. An output of a selected memory cell is read out to the vertical memory output line 11, and is sampled in the accumulating capacitor 25 through the switching transistor 26. Then, while the clamping transistor 6 is turned on, pulses ϕSH and ϕMWR are respectively applied to the switching transistor 8 and the writing transistor 10 whereby the offset of the column amplifier 24 is writing into the memory cell.

The offset written in the memory cell is read and sampled in a similar manner as the readout and the sampling of the signal written in the memory cell. A sampling of the offset output from the memory cell to the accumulating capacitor 27 is executed by applying a pulse ϕTN to the switching transistor 28. A voltage on the accumulating capacitor 25 includes, in addition to the amplified pixel signal and the offset of the column amplifier 24, an offset of the amplifying transistor 36. On the other hand, a voltage on the accumulating capacitor 27 includes, in addition to the offset of the column amplifier 24, an offset of the amplifying transistor 36. Therefore, the final sensor output from the differential amplifier 36 does not contain a fixed pattern noise resulting from these offsets. Also the readout operation from the memory to the accumulating capacitor in the third embodiment is free from a loss in the signal voltage owing to the amplifying function of the memory cell 35. Therefore, the third embodiment can provide a signal of a higher S/N ratio in comparison with the first or second embodiment.

In the foregoing embodiments, there is only required a number of memory cells corresponding to a number of picture elements necessary for constructing an image, and the column amplifier is only required to have a gain exceeding unity in order to compensate the signal division.

Also certain other embodiments are possible, based on the principle of the present invention. For example, there can be conceived a configuration of connecting another column amplifier to the vertical memory output line in order to prevent a signal division in the signal transfer from the memory to the accumulating capacitor. Also it is conceivable to utilizing a clamping circuit as an offset eliminating circuit.

Also in the foregoing embodiments, the solid-state image pickup device can be constructed on a same semiconductor substrate, but the differential amplifier 33 may be provided outside such substrate, in order that a noise generated by the differential amplifier 33 does not affect other circuit components.

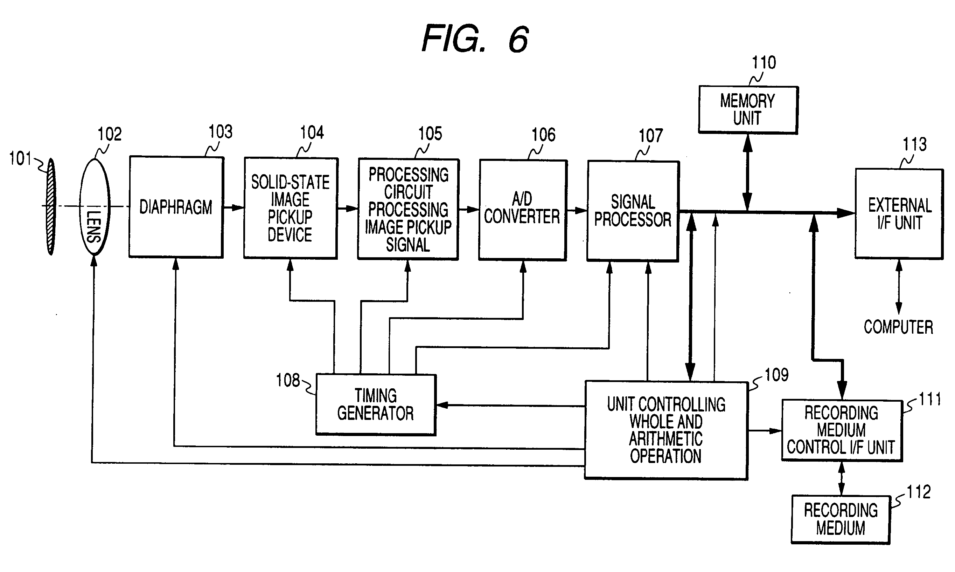

In the following, there will be explained, with reference to Fig. 6, an embodiment in which a solid-state image pickup device of the invention is applied to a still camera capable of taking a moving image.

Fig. 6 is a block diagram showing a case where a solid-state image pickup device of the invention is applied to a still camera capable of taking a moving image.

In Fig. 6, there are shown a barrier 101 for protecting a lens and serving as a main switch; a lens 102 for focusing an optical image of an object on an image pickup device (solid-state image pickup device) 104; a diaphragm 103 for varying a light amount transmitted by the lens 102; an image pickup device 104 for fetching an image of the object focused by the lens 102 as an image signal; an A/D converter 106 for an analog-digital conversion of an image outputted from the image pickup device 104; a signal processing unit 107 for executing various corrections and a signal compression on the image data outputted from the A/D converter 106; a timing generator 108 for output various timing signals to the image pickup device 104, a pickup image signal processing circuit 105, the A/D converter 106 and the signal processing unit 107; a controlling unit 109 for controlling whole and arithmetic operations; a memory unit 110 for temporarily storing the image data; an interface 111 for recording on or readout from a recording medium; a removable memory medium 112 for recording or readout of the image data; and an interface 113 for communication with an external computer or the like.

In the following there will be explained an operation of the still video camera in the aforementioned structure in an image pickup operation.

When the barrier 101 is opened, there are turned on a main power supply, then a power supply to a control system and a power supply of an image pickup system such as the A/D converter 106.

Then, in order to control an exposure amount, the controlling unit 109 fully opens the diaphragm 103, whereupon a signal outputted from the image pickup device 104 is converted by the A/D converter 105 and supplied to the signal processing unit 107. Based on data therefrom, the controlling unit 109 executes an exposure calculation. A brightness is judged from the result of such light metering, and the controlling unit 109 controls the diaphragm.

Then, based on the signal from the image pickup device 104, the controlling unit 109 extracts a high frequency component and calculates a distance to the object. Then the lens is driven and is judged whether it is in an in-focus state. If judged not in focus, the lens is driven again and a distance measurement is executed. Thereafter, a main exposure is started when an in-focus state is confirmed.

When the exposure is terminated, an image signal outputted from the image pickup device 104 is A/D-converted in the A/D converter 106, then processed in the signal processing unit 107 and is written into the memory 110 by the controlling unit 109.

Thereafter, the data accumulated in the memory 110 are transmitted, under the control of the controlling unit 109, by a recording medium controlling I/F 111 and recorded in the removable memory medium 112 such as a semiconductor memory.

Also the data may be supplied through an external I/F 113 for example to a computer for image processing.

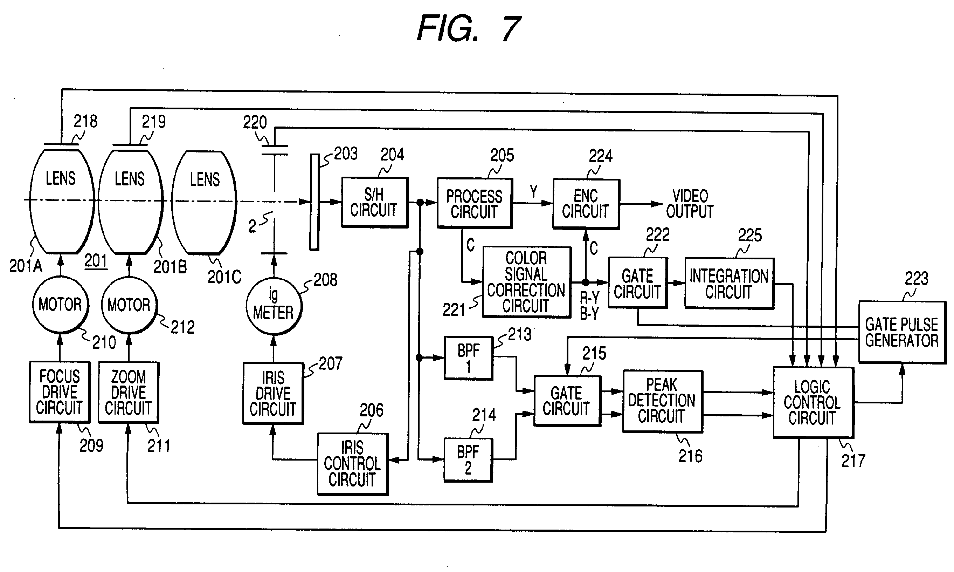

In the following, there will be explained, with reference to Fig. 7, an embodiment in which a solid-state image pickup device of the invention is applied to a video camera (image pickup system).

Fig. 7 is a block diagram showing a case where a solid-state image pickup device of the invention is applied to a video camera, wherein 201 indicates a photographing lens including a focusing lens 201A for focusing, a zoom lens 201B for zooming and a lens 201C for imaging.

There are also provided a diaphragm 202; a solid-state image pickup element (solid-state image pickup device) 203 for a photoelectric conversion of an object image focused on an image pickup plane into an electrical image signal; and a sample hold circuit (S/H circuit) 204 for sample holding of the image signal outputted from the solid-state image pickup device 203 and amplifying a level thereof, thereby outputting an image signal.

A process circuit 205 executes predetermined processes such as a gamma correction, a color separation, a blanking process and the like on the image signal outputted from the sample hold circuit 204, thereby outputting a luminance signal Y and chroma signals C. The chroma signals C from the process circuit 205 are subjected to corrections of a white balance and a color balance in a color signal correction circuit 221 and are outputted as color difference signals R-Y and B-Y.

Then the luminance signal Y from the process circuit 205 and the color difference signals R-Y, B-Y from the color signal correction circuit 221 are modulated in an encoder circuit (ENC) 224 and outputted as a standard television signal, which is supplied to a monitor EVF of an unillustrated video recorder or an electronic view finder.

An iris control circuit 206 controls an iris driving circuit 207 based on the image signal supplied from the sample hold circuit 204, for automatic control of an ig meter to control the aperture of the diaphragm 206 in such a manner that the level of the image signal becomes a constant level. Band-pass filters (BPF) 213, 214 of different bands extract, from the image signal outputted by the sample hold circuit 204, high frequency components necessary for focus detection. Signals from the first band-pass filter 213 (BPF1) and the second band-pass filter 214 (BPF2) are respectively gated by a gate circuit 215 and a focus gate frame signal. Then a peak value is detected and held in a peak detection circuit 216 and is supplied to a logic control circuit 217.

Such signal is called a focusing voltage, which is used for focusing.

There are also provided a focus encoder 218 for detecting a moving position of the focusing lens 201A, a zoon encoder 219 for detecting a moving position of the zoom lens 201B, and an iris encoder for detecting an aperture of the diaphragm 202. The values detected by these encoders are supplied to a logic control circuit 217 for system control. The logic control circuit 217 executes, based on an image signal corresponding to a preselected focus detection area, a focus detection for the object and a focusing operation. More specifically, it fetches the peak values of the high frequency components supplied from the band pass filters 213, 214 and supplies a focus driving circuit 209 with controls signals for a rotating direction, a rotation speed, a rotation/stop etc. of a focusing motor 210 in order to drive the focusing lens 201A to a position where the peak value of the high frequency component becomes maximum.

The present invention is applicable to a solid-state image pickup device adapted for use in a digital camera (still camera) or a digital video camera, and is advantageously applicable to a solid-state image pickup device capable of taking an image of a fast-moving object.

The invention provides a solid-state image pickup device with little gap in operation timings of the pixels, providing a sensor output of a high S/N ratio. In a solid-state image pickup device provided with a photoelectric conversion pixel unit 1 formed by an array of a plurality of pixels each containing at least a photoelectric conversion unit and a transistor for amplifying a signal from the photoelectric conversion unit, and memory units 9, 10 formed by an array of analog memory cells corresponding to at least a part of the pixels of the photoelectric conversion pixel unit 1, there are provided plural coupling capacitors respectively connected to plural output lines each of which is connected to a column of pixels, for clamping a signal from a pixel thereby eliminating a noise from the pixel, and plural amplifiers 24 for amplifying a signal voltage from the coupling capacitor with a gain exceeding unity and outputting an amplified signal for writing into the analog memory cell.

## Claims

1. A solid-state image pickup device provided with a photoelectric conversion pixel unit formed by an array of a plurality of pixels each containing at least a photoelectric conversion unit for converting an incident light into a signal charge for accumulation and a transistor for converting the signal charge into a voltage signal and amplifying the voltage signal for output, and a memory unit formed by an array of analog memory cells corresponding to at least a part of the pixels of the photoelectric conversion pixel unit, comprising:
a coupling capacitor provided for each column of the photoelectric conversion unit and clamping the signal voltage from the pixel thereby eliminating a noise of the pixel; and
an amplifier provided in each column of the photoelectric conversion unit and amplifying the signal voltage from the pixel with a gain exceeding unity for writing into the memory cell corresponding to the pixel.

2. A solid-state image pickup device according to claim 1, wherein:
the coupling capacitor serves as a first coupling capacitor;
the amplifier has a feedback type configuration and includes a second coupling capacitor for a capacitative coupling of an output terminal and an input terminal of the amplifier; and
a gain of the amplifier is determined by a ratio of the first coupling capacitor and the second coupling capacitor.

3. A solid-state image pickup device according to claim 1 or 2, wherein:
the analog memory cell is an amplification type memory cell including at least a signal accumulating capacitor, a transistor for signal writing, and a transistor for amplifying the signal.

4. A solid-state image pickup device according to claim 1 or 3, further comprising:
circuit means which is provided for each column of the analog memory cell of the memory unit and serves to output offsets of the amplifier and the analog memory cell and a signal from the analog memory cell.

5. A solid-state image pickup device according to claim 4, wherein:
the circuit means includes a first accumulating capacitor for accumulating the offsets, a first transfer transistor for transferring the offsets to the first accumulating capacitor, a second accumulating capacitor for accumulating the signal from the analog memory cell, and a second transfer transistor for transferring from the analog memory cell to the second accumulating capacitor.

6. A solid-state image pickup device according to claim 4 or 5, further comprising:
means which executes a subtraction of the offsets and the signal from the circuit means.

7. A camera comprising a solid-state image pickup device according to any of claims 1 to 6, an optical system for focusing a light onto the solid-state image pickup device, and a signal processing circuit for processing a signal from the solid-state image pickup device.
